# DEMANDE DE BREVET EUROPEEN

(11) **EP 0 930 006 A1**
(43) Date de publication de la demande: **21.07.1999**
(21) Numéro de dépôt: 99460002.1
(22) Date de dépôt: 19.01.1999
(51) Int. Cl.: A01K 5/02

(54) **Appareil de distribution automatique d'aliments pour animaux**

(30) Priorité: 19.01.1998 FR 9800685
(71) Demandeur: Lecomte, Gérard, 14350 St Martin-Des-Besaces (FR)
(72) Inventeur: Lecomte, Gérard, 14350 St Martin-Des-Besaces (FR)
(74) Mandataire: Branger, Jean-Yves

(57) **Abrégé**

L'invention concerne un appareil de distribution automatique d'aliments (A) pour animaux, qui comporte un réservoir de stockage (1) desdits aliments, une mangeoire (30) et des moyens de transfert automatique de doses d'aliments (A) du réservoir (1) à la mangeoire (30).

Il est remarquable par le fait que lesdits moyens de transfert consistent en un organe de poussée disposé au fond dudit réservoir (1), qui affecte la forme d'un peigne à doigts parallèles cylindriques (41) et qui est animé périodiquement d'un mouvement alternatif de va-et-vient selon une direction sensiblement horizontale, entre une position rétractée et une position déployée dans laquelle il pousse une dose d'aliments (A) en direction d'un orifice de sortie (124) pour la déverser dans ladite mangeoire (30).

## Description

La présente invention se rapporte à un appareil de distribution automatique d'aliments pour les animaux, en particulier les animaux domestiques.

Lors des déplacements de propriétaires d'animaux domestiques à l'extérieur de chez eux, par exemple à l'occasion de périodes de vacances, se pose le problème de la garde de ces animaux.

Certains propriétaires ne peuvent matériellement pas emmener avec eux leur animal et ne souhaitent pas le confier à un chenil ou autre structure spécialisée.

Il leur reste la solution de laisser l'animal à leur domicile et de demander à un voisin ou à un ami de venir régulièrement lui donner une ration de nourriture.

Il s'agit bien entendu d'une solution très contraignante, et c'est dans le but de solutionner ce problème que des appareils de distribution automatique d'aliments pour animaux ont été proposés.

Ainsi, on divulgue dans le document FR-A-2 664 129 un distributeur automatique d'aliments qui comprend un réservoir de nourriture qui surplombe un appareil fournisseur et doseur. Des moyens commandent l'appareil fournisseur et doseur de manière à distribuer à intervalles de temps réguliers une ration d'aliments.

Si, dans la pratique, un tel appareil semble globalement donner satisfaction, il présente cependant un inconvénient sérieux lié à la forme et à la structure de l'appareil fournisseur et doseur.

En effet, il s'agit d'une pièce généralement cylindrique qui obstrue le fond de la trémie. Elle présente à sa surface une cavité de réception d'aliments et est animée d'un mouvement de pivotement autour d'un axe longitudinal et horizontal. On comprend qu'à chaque pivotement de la pièce a lieu le transfert d'une dose d'aliments, du réservoir vers une gamelle de réception.

En particulier lorsque les aliments consistent en des croquettes sèches, il s'opère entre la pièce généralement cylindrique et la paroi du réservoir un cisaillement régulier des aliments, de sorte qu'une partie de ceux-ci est réduite à l'état de très petits résidus ayant sensiblement la consistance d'une farine.

Lorsque ces résidus tombent dans la gamelle, ils sont rarement ingurgités par l'animal car ils sont peu appétents.

Un autre inconvénient est lié au fait qu'ils présentent une granulométrie suffisamment fine pour s'insérer entre des pièces mécaniques de l'appareil et provoquer des blocages et des pannes.

L'appareil décrit dans le document FR-A-2 565 066 comporte quant à lui un système de mangeoires déplaçables à la manière de tiroirs, entre une position escamotée de remplissage et une position sortie dans laquelle les aliments peuvent être consommés.

Là encore se pose le problème de la dégradation des aliments par cisaillement.

La présente invention ajustement pour principal objectif de solutionner ce problème. En d'autres termes, elle vise à fournir un appareil de distribution automatique d'aliments pour animaux qui assure régulièrement la délivrance d'aliments intacts, aucunement abîmés lors de leur transfert dans la mangeoire.

Un autre but de la présente invention est de fournir un appareil simple, demandant peu de maintenance.

Dans une forme particulière de réalisation, l'invention a aussi pour objectif de fournir un appareil qui permet également de distribuer de l'eau renouvelée fréquemment.

Selon cet aspect de l'invention, elle a également pour but de se servir de l'eau d'alimentation pour déplacer l'organe de poussée des aliments.

L'appareil selon l'invention comporte un réservoir de stockage desdits aliments, une mangeoire et des moyens de transfert automatique de doses d'aliments du réservoir à la mangeoire.

Il se caractérise essentiellement par le fait que lesdits moyens de transfert consistent en un organe de poussée disposé au fond dudit réservoir, qui affecte la forme d'un peigne à doigts parallèles et qui est animé périodiquement d'un mouvement alternatif de va-et-vient selon une direction sensiblement horizontale, entre une position rétractée et une position déployée dans laquelle il pousse une dose d'aliments en direction d'un orifice de sortie pour la déverser dans ladite mangeoire.

Le présent demandeur s'est aperçu que seul un organe de poussée en forme de peigne à doigts parallèles permet de déplacer les aliments stockés dans le réservoir sans les abîmer et les désagréger.

Dans une forme de réalisation particulièrement avantageuse, les doigts ont une forme cylindrique.

Par ailleurs, selon d'autres aspects non limitatifs de l'invention :
- des moyens de déplacement dudit organe de poussée qui se déclenchent automatiquement, notamment grâce à un mécanisme à horloge, un nombre prédéterminé de fois par jour ;
- lesdits moyens de déplacement sont de type électrique ;
- ledit organe de poussée est solidaire d'un piston ;
- le fluide qui déplace le piston à l'intérieur de son cylindre de réception est de l'eau provenant du réseau de distribution ;
- ledit organe de poussée est équipé d'au moins un ressort de rappel qui tend à le ramener dans sa position rétractée ;
- la conduite d'alimentation en eau de la chambre arrière du piston comporte un petit orifice raccordé à un abreuvoir, de sorte que lorsque ladite conduite est approvisionnée en eau, une petite partie de celle-ci alimente en continu ledit abreuvoir, et lorsque l'alimentation en eau est interrompue, c'est la chambre arrière du piston qui se vide via ce petit orifice, sous l'effet dudit ressort de rappel ;
- ledit abreuvoir est équipé d'un système d'évacuation de trop plein ;
- la chambre avant du piston est raccordée audit abreuvoir, de sorte que, lors du vidage de la chambre arrière, de l'eau est aspirée dans celle-ci et éventuellement déversée sur les aliments présents dans la mangeoire pour les humidifier ;
- il comporte des moyens de réchauffage de l'eau contenue dans l'abreuvoir.

D'autres caractéristiques et avantages de l'invention apparaîtront à la lecture de la description détaillée qui va suivre, de certains modes de réalisation préférentiels. Cette description sera faite en référence aux dessins annexés dans lesquels :

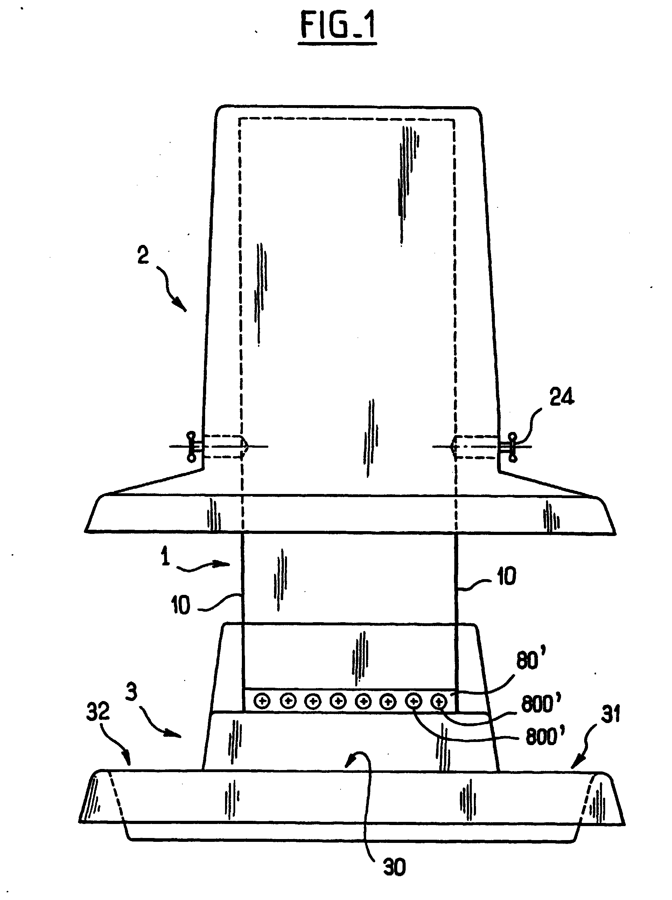

- la figure 1 est une vue de face de l'appareil selon la présente invention ;
- la figure 2 est un schéma simplifié montrant de côté, selon un plan de coupe vertical et longitudinal, l'appareil de la figure 1;
- la figure 3 est une vue de dessus de l'organe de poussée des aliments et de ses moyens d'actionnement ;
- la figure 4 est une vue en perspective d'une partie de l'organe de poussée ;
- la figure 5 est un schéma montrant une variante de réalisation des moyens d'actionnement de l'organe de poussée ;
- la figure 6 est un schéma d'encore une autre variante de réalisation des moyens d'actionnement de l'organe de poussé ;
- la figure 7 est un schéma simplifié de côté, coupé selon un plan vertical et longitudinal d'un appareil selon l'invention, intégrant les moyens illustrés à la figure 6.

L'appareil de distribution automatique d'aliments pour animaux représenté sur les figures annexées comporte essentiellement un réservoir 1 avec son capot de fermeture 2, un socle 3 avec une mangeoire 30 et un abreuvoir 31, ainsi qu'un organe de poussée 4 des aliments A stockés dans le réservoir et ses moyens d'actionnement 5.

Le réservoir est réalisé par exemple en matière plastique. Il comporte deux parois latérales parallèles et verticales 10 ainsi que des parois arrière 11 et avant 12 inclinées et convergentes vers le bas.

La paroi arrière 11 se poursuit au niveau de son extrémité inférieure par une plaque horizontale 111 qui constitue le fond proprement dit du réservoir 1. A son extrémité supérieure, cette paroi est rabattue à 90° vers l'intérieur pour former une aile 112 de réception du capot 2 que l'on décrira plus loin.

La paroi avant 12 s'étend sur une hauteur nettement inférieure à celle de la paroi arrière 11. En effet, elle se poursuit vers le haut, sensiblement à 90° et vers l'intérieur, par une paroi secondaire 121 approximativement parallèle à la paroi arrière 11.

L'espace qui sépare l'extrémité supérieure de la paroi secondaire 121 de l'aile 112 précitée ménage une ouverture **V** par laquelle on peut déverser des aliments **A** à l'intérieur du réservoir.

L'extrémité inférieure de la paroi avant 12 est également recourbée à 90°, mais dans le sens opposé, de façon à ménager avec la base 111 du réservoir 1, un petit couloir débouchant sur un orifice 124 de distribution et de déversement des aliments.

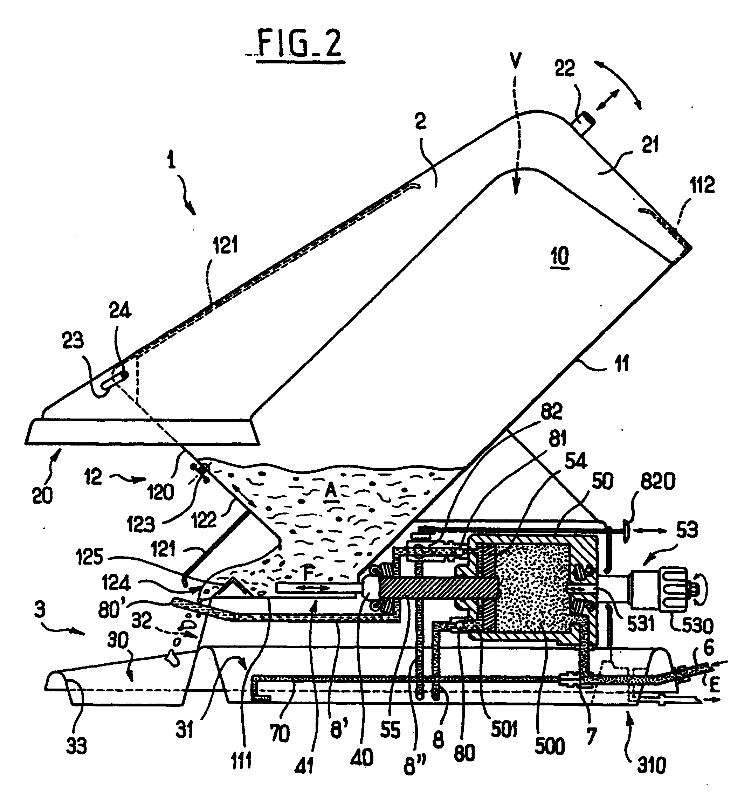

Cette paroi avant est équipée d'une plaque déflectrice coulissante 122 pourvue d'un bouton de réglage 123, apte à coulisser le long de ladite paroi. Ainsi, comme le montre clairement la figure 2, il est possible, en fonction du positionnement de la plaque déflectrice, de faire varier la section du réservoir de stockage au voisinage de sa base.

Enfin, sur la plaque 111 est prévu transversalement, à proximité immédiate de l'orifice 124, un petit organe en forme de "V" renversé 125 dont on expliquera plus loin la fonction.

Comme dit plus haut, le réservoir 1 est recouvert d'un capot de protection 2, également en matière plastique, qui prend appui d'une part sur la paroi secondaire avant 121 du réservoir, et d'autre part sur l'aile supérieure 112 de la paroi arrière de ce réservoir.

Ce capot comporte une extrémité inférieure 20 qui forme une avancée par rapport au réservoir de manière à ménager une sorte d'abri au-dessus de la mangeoire 3 qui équipe l'appareil.

Bien entendu, ce capot est amovible. Il comporte latéralement en partie avant des boutons 24 qui s'engagent dans des lumières 23 prévues sur les côtés du capot, et une poignée de manoeuvre 22 prévue en son sommet.

De la sorte, il est possible d'enlever le capot 2 du réservoir pour déverser dans ce dernier une certaine quantité d'aliments.

A titre indicatif, le volume du réservoir peut être suffisant pour recevoir une quantité d'aliments de l'ordre de 15 à 20 kilos, c'est-à-dire une quantité largement suffisante pour nourrir un chien de taille moyenne pendant un mois.

On notera que le fait que les deux parois latérales 10 du réservoir soient verticales permet d'éviter la formation d'une voûte à l'intérieur de celui-ci, comme c'est le cas le plus fréquent dans les trémies dont l'ensemble des parois est incliné.

Le socle 3 de l'appareil affecte, en vue de dessus, la forme d'un "U" avec une base frontale et transversale 3 délimitant une mangeoire d'aliments secs et deux ailes 31 et 32, longitudinales et parallèles, dont l'une 31 constitue un abreuvoir. La seconde aile 32, a une fonction que l'on explicitera plus loin.

Ce socle est par exemple également fabriqué en matière plastique et la partie centrale qui sépare les deux ailes 31 et 32 sert de support de réception de la base du réservoir 1. Il sert également au logement de l'organe de poussée 4 et de ses moyens d'actionnement 5.

Bien entendu, la mangeoire 30 ainsi que les deux ailes 31 et 32 sont deux à deux séparées par une cloison venant de moulage avec le reste du socle.

Comme déjà dit plus haut, ledit organe de poussée 4 est disposé au fond du réservoir 1, à proximité immédiate et parallèlement à la plaque de fond 111. Cet organe affecte la forme d'un peigne avec une base transversale 40 sur laquelle sont fixés des doigts parallèles 41. Dans le mode de réalisation présenté ici, les doigts sont cylindriques. Toutefois, ils pourraient avoir une autre forme.

Le peigne est par exemple réalisé en métal.

L'organe de poussée est animé périodiquement d'un mouvement alternatif de va-et-vient, dans une direction sensiblement horizontale, par des moyens d'actionnement 5 qui se trouvent disposés à l'aplomb de la paroi arrière 1 1 du réservoir.

Plus précisément, la base 40 du peigne est fixée à la tige 55 d'un piston mobile 54. Celui-ci peut être déplacé à l'intérieur d'un cylindre 50 d'axe horizontal.

Par convention, on appellera "chambre arrière 500" la chambre qui se trouve entre la tête de piston proprement dite et l'arrière du cylindre (sur la droite de la figure 2), et par "chambre avant 501" l'autre chambre disposée du côté de la tige du piston.

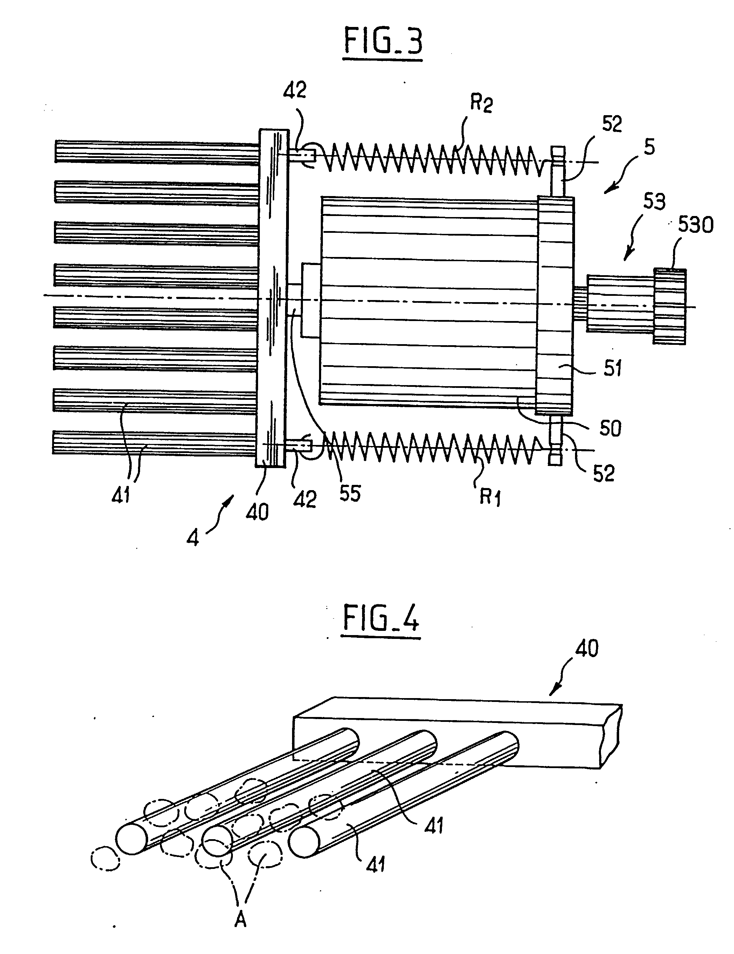

Comme le montre plus précisément la figure 3, le cylindre 50 est pourvu d'un couvercle amovible 51 qui présente des pattes latérales 52 diamétralement opposées l'une à l'autre. D'une manière similaire, la face de la base du peigne qui est opposée aux doigts 41 porte deux tétons 42. Ces pattes et tétons servent à l'accrochage de ressorts de compression longitudinaux **R**_{**1**} et **R**_{**2**}. Ces ressorts tendent à ramener l'organe de poussée 4 dans sa position rétractée, dans laquelle la tige 55 est pratiquement complètement rentrée à l'intérieur du cylindre 50.

On notera que le couvercle 51 est équipé d'un organe 53 de réglage de la course du piston. Pour ce faire, il comprend une molette 530 qui actionne une tige coulissante 531 d'axe horizontal débouchant à l'intérieur du cylindre. On comprend qu'en fonction de la position de celle-ci, on règle en conséquence la course du piston, puisque la tige 531 forme une butée d'arrêt dudit piston.

Dans une variante de réalisation non représentée, le cylindre peut être dépourvu d'organe de réglage 53.

Dans ce cas, la tige 55 du piston se prolonge du côté de la chambre arrière 500 pour traverser le couvercle 51. Une butée réglable, prévue sur ce couvercle, permet de contrarier le déplacement de la tige.

La chambre arrière 500 du cylindre est connectée à une conduite d'alimentation 6 en eau **E** provenant du circuit de distribution.

Sur cette conduite sont par exemple prévues une électrovanne ainsi qu'une horloge non représentées, qui vont permettre de faire circuler périodiquement, selon un cycle prédéterminé, de l'eau **E** de la conduite vers la chambre arrière.

La pression d'eau **E** contre le piston est suffisante pour assurer son déplacement vers la gauche du cylindre, à l'encontre des ressorts **R**_{**1**} et **R**_{**2**}**.**

Comme le montre particulièrement la figure 2, sur la conduite 6 est prévu un petit orifice 7 qui est relié à une tubulure 70, laquelle débouche dans l'abreuvoir 31 du socle 3.

Ainsi, on comprend que lors de l'alimentation en eau de la chambre arrière du cylindre 5, une partie de celle-ci est déviée via l'orifice 7 jusque dans l'abreuvoir 31.

A titre indicatif, cet orifice peut avoir un diamètre de l'ordre de 1,5 mm de sorte que pour une durée de remplissage de la chambre arrière 500 de l'ordre de 60 secondes, environ 2 à 3 litres d'eau s'échappent de l'orifice 7 pour aller se déverser dans l'abreuvoir 31.

L'eau réceptionnée dans l'abreuvoir est éventuellement évacuée par un système de trop plein qui porte la référence numérique 310.

A l'arrêt du cycle d'alimentation de la chambre 500 en eau **E**, celle-ci va naturellement s'écouler par le petit orifice 7. Ce vidage est facilité par le fait que les deux ressorts **R**_{**1**} et **R**_{**2**} tendent à retrouver leur position naturelle d'équilibre.

C'est donc la succession de ces cycles de vidage et remplissage de la chambre 500 qui va permettre d'actionner l'organe de poussée 4 selon un mouvement périodique alternatif de va-et-vient, comme symbolisé par la flèche **F** à la figure 2. Ce mouvement s'opère selon une direction sensiblement horizontale, parallèlement à la plaque 111. On notera que sur cette figure, l'organe de poussée 4 est dans sa position déployée dans laquelle il tend à évacuer les aliments **A** du réservoir.

Selon un mode de réalisation facultatif de la présente invention, la chambre avant 501 du cylindre 5 est connectée, via une petite conduite 8, à l'abreuvoir 31. Sur cette conduite est prévu un clapet à bille 80, de sorte que lors du vidage de la chambre 500, le vide créé à l'intérieur de la chambre avant 501 provoque le déplacement de la bille du clapet et l'aspiration d'une partie de l'eau contenue dans l'abreuvoir vers l'intérieur de la chambre 501.

Cette chambre est par ailleurs connectée à un robinet à trois voies 82, également pourvu d'un clapet à billes 81, dont une voie 8' débouche sur une rampe 80' de gicleurs 800' disposés au-dessus de la mangeoire 30. L'autre voie 8" est quant à elle connectée à une tubulure de retour à l'abreuvoir 31.

On comprend qu'en fonction de la position de la manette de réglage 820 du robinet à trois voies, l'eau aspirée dans l'abreuvoir y est soit refoulée, soit évacuée par les gicleurs 800' à l'intérieur de la mangeoire pour humidifier les aliments qui y sont présents.

Lors du mouvement de va-et-vient de l'organe de poussée 4, les doigts cylindriques 41 déplacent les aliments sans les abîmer. En fait, le demandeur a constaté que ces aliments roulent devant ou entre les doigts sans être écrasés. Ils sont déplacés en douceur, qu'ils soient constitués exclusivement de croquettes ou d'un mélange de produits de nature et de granulométrie variées.

Le déplacement en douceur se fait d'autant mieux que les doigts ne présentent aucune surface sur laquelle les aliments peuvent reposer ou contre laquelle ils peuvent se coincer.

Une autre forme de réalisation avantageuse des doigts est celle selon laquelle ils présentent une section carrée, avec deux angles opposés dirigés verticalement.

Lors du mouvement d'avance des doigts en direction de l'orifice 124 du réservoir, la portion d'aliments présente au fond du réservoir est déplacée en direction de la pièce 125 en forme de "V" renversé, et les aliments qui franchissent cette saillie passent à travers l'orifice 124 pour tomber dans la mangeoire 3.

Il est de la compétence de l'homme du métier de prévoir un dimensionnement particulier des doigts pour que la dose d'aliments déversés dans la mangeoire soit par exemple suffisante pour une demi-journée.

Lorsque l'appareil est prévu pour un usage extérieur et en hiver, il peut être prévu dans le matériau plastique qui constitue le socle 3 de l'appareil, des filaments chauffants qui permettent à l'eau contenue dans l'abreuvoir 31 de ne pas geler.

La seconde aile 32 du socle 3, qui constitue également un réceptacle, ne reçoit ni eau, ni aliments **A**. Un tel réceptacle peut, le cas échéant, recevoir des déchets de nourriture tels que des os de poulets, que le propriétaire de l'animal souhaite lui donner.

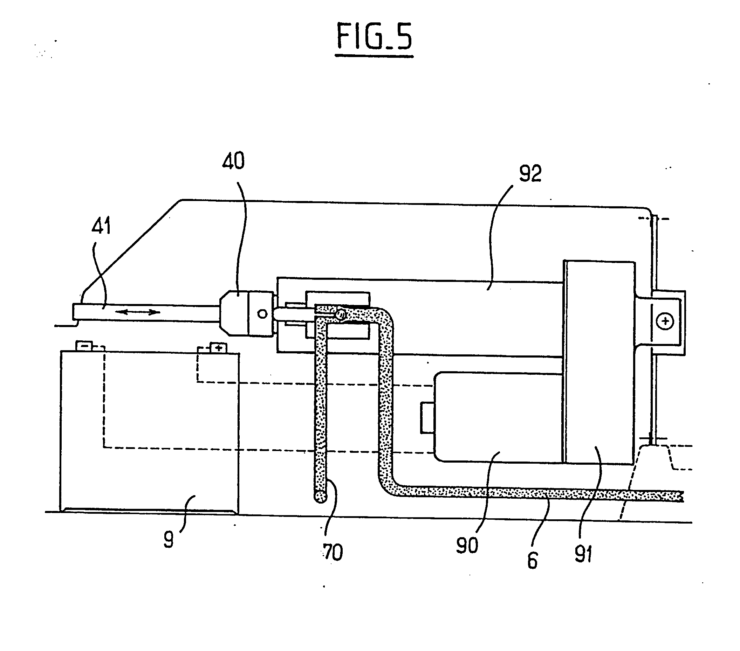

Dans la variante de réalisation de la figure 5, les moyens d'actionnement de l'organe de poussée 4 sont de type électrique. Il s'agit en l'occurrence d'une batterie 9 délivrant par exemple un courant de 12 volts qui alimente un moteur 90 lequel, via un motoréducteur 91, commande le déplacement d'un vérin à double effet 92. L'alimentation en eau de l'abreuvoir via les conduites 6 et 70 peut être couplée au déplacement de la tige du vérin 92.

Bien entendu, dans une forme de réalisation non représentée, il peut être prévu un actionnement de l'organe de poussée par des moyens mécaniques tels qu'un système à biellettes.

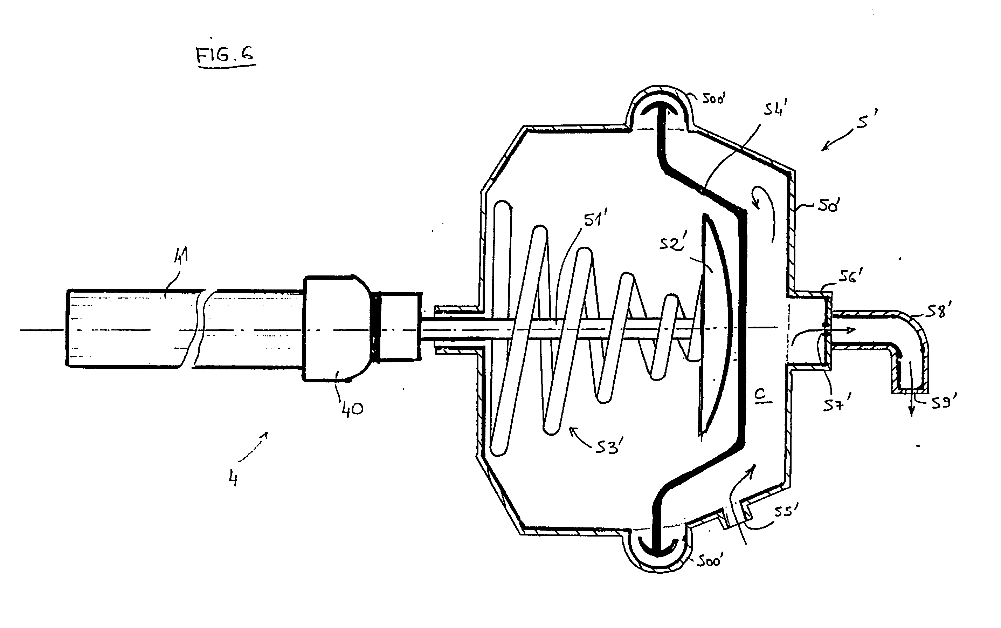

Dans la forme de réalisation de la figure 6, l'organe de poussée 4, avec ses doigts 41 associés, est lié à une tige longitudinale axiale 51', faisant partie intégrante de moyens d'actionnement 5'.

A l'extrémité de cette tige est fixée une calotte 52', faisant office de piston, dont la concavité est tournée vers la tige.

Cet ensemble est logé dans une boîte étanche 50', la tige 51' traversant la paroi de la boîte par une ouverture aménagée à cet effet.

Entre cette paroi est la calotte 52' est prévu, entourant la tige 51', un ressort de traction hélicoïdal 53' dont le diamètre diminue en direction de la calotte.

Ce ressort tend à ramener l'organe 4 dans une position dans laquelle la tige 51' s'étend intégralement dans la boîte 50' (position de la figure 6).

Celle-ci est pourvue d'une rainure périphérique 500' dans laquelle est mise en place une membrane 54', par exemple en caoutchouc, destinée à venir en contact avec la calotte 52'. La membrane 54' définit, avec le reste de la boîte 5', une chambre C d'écoulement d'eau.

L'eau rentre dans la chambre C par une ouverture 55' et exerce une pression sur la membrane 54', qui tend à déplacer l'ensemble calotte 52'/tige 51'/organe 4', à l'encontre de l'action du ressort 51', vers la gauche de la figure.

L'eau admise dans la chambre est évacuée vers l'extérieur, pour une petite partie, par un orifice d'échappement 56' présentant un étranglement 57'. Ce dernier débouche dans une tubulure coudée 58' dont l'ouverture 59' surplombe par exemple un abreuvoir non représenté de l'appareil.

Lorsque l'arrivée d'eau est interrompue, le ressort 53' tend à revenir vers sa position d'équilibre. Il déforme donc la membrane 54', ce qui tend à vider complètement la chambre C de l'eau qu'elle contient, par l'orifice 56'.

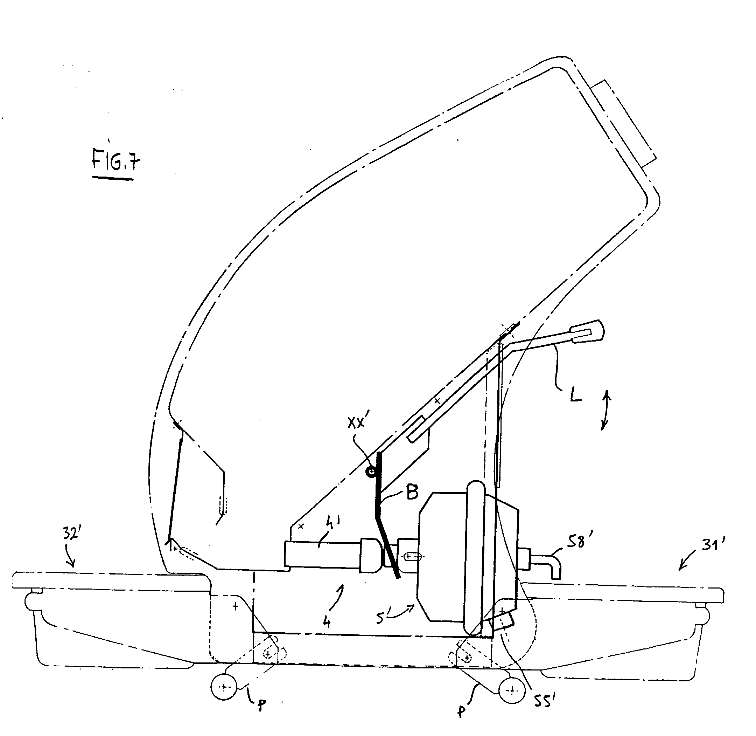

En se reportant à la figure 7, on y voit les moyens décrits ci-dessus intégrés dans un appareil de distribution automatique.

Cet appareil comporte des pieds **P** réglables en hauteur, un abreuvoir 31' et un réceptacle d'aliments secs disposés 32' disposés à l'opposé l'un de l'autre, et ayant la forme de cuvettes amovibles.

L'abreuvoir peut être équipé d'une tubulure non représentée, adaptée pour évacuer l'eau de trop plein.

Comme le montre cette figure, l'appareil est pourvu d'un levier **L** manoeuvrable à la main, dont l'actionnement permet de faire pivoter un élément **B** en forme de fourche, articulé autour d'un axe horizontal **XX'**. Cet élément **B** présente deux doigts de fourche parallèles qui s'étendent de part et d'autre de la tige 51' de moyens 5', dans sa partie qui s'étend à l'extérieur de la boîte 50'.

On comprend qu'en fonction du positionnement du levier, on peut faire varier le positionnement de l'élément **B**. De cette façon, il est possible de régler le déplacement de l'organe de poussée et, corrélativement, la quantité d'aliments à distribuer.

Il est possible de prévoir sur la façade de l'appareil une série d'encoches correspondant à des positions différentes préétablies du levier **L**. Ces positions peuvent correspondre par exemple aux quantités d'aliments à délivrer à un chien de petite taille, respectivement de moyenne et de grande taille.

En principe, le levier **L** est laissé dans une même position pendant toute la durée dans laquelle on souhaite distribuer automatiquement des aliments à l'animal.

Toutefois, en cas d'interruption de l'alimentation en eau ou dans l'hypothèse où la ration d'aliments délivrée n'est pas suffisante, on peut actionner manuellement, plusieurs fois à suivre, le levier **L** et l'élément **B** à l'encontre du ressort 53' pour délivrer plusieurs fois, en de petites quantités, de nouveaux aliments.

## Revendications

1. Appareil de distribution automatique d'aliments (A) pour animaux, qui comporte un réservoir de stockage (1) desdits aliments, une mangeoire (30, 32') et des moyens (4) de transfert automatique de doses d'aliments (A) du réservoir (1) à la mangeoire (30, 32'), caractérisé par le fait que lesdits moyens de transfert consistent en un organe de poussée (4) disposé au fond dudit réservoir (1), qui affecte la forme d'un peigne à doigts parallèles (41) et qui est animé périodiquement d'un mouvement alternatif de va-et-vient selon une direction sensiblement horizontale, entre une position rétractée et une position déployée dans laquelle il pousse une dose d'aliments (A) en direction d'un orifice de sortie (124) pour la déverser dans ladite mangeoire (30, 32').

2. Appareil selon la revendication 1, caractérisé par le fait que lesdits doigts (41) ont une forme cylindrique.

3. Appareil selon la revendication 1 ou 2, caractérisé par le fait qu'il comporte des moyens de déplacement (5, 5') dudit organe de poussée (4) qui se déclenchent automatiquement, notamment grâce à un mécanisme à horloge, un nombre prédéterminé de fois par jour.

4. Appareil selon la revendication 3, caractérisé par le fait que lesdits moyens de déplacement sont de type électrique.

5. Appareil selon l'une des revendications 1 à 3, caractérisé par le fait que ledit organe de poussée (4) est solidaire d'un piston (54, 52').

6. Appareil selon la revendication 5, caractérisé par le fait que le fluide qui déplace le piston (54) à l'intérieur de son cylindre de réception (50) est de l'eau (E) provenant du réseau de distribution.

7. Appareil selon la revendication 6, caractérisé par le fait que ledit organe de poussée (4) est équipé d'au moins un ressort de rappel (R₁, R₂) qui tend à le ramener dans sa position rétractée.

8. Appareil selon les revendications 6 et 7 prises en combinaison, caractérisé par le fait que la conduite d'alimentation (6) en eau (E) de la chambre arrière (500) du piston (54) comporte un petit orifice (7) raccordé à un abreuvoir (31), de sorte que lorsque ladite conduite (6) est approvisionnée en eau (E), une petite partie de celle-ci alimente en continu ledit abreuvoir (31), et que lorsque l'alimentation en eau est interrompue, c'est la chambre arrière (500) du piston (54) qui se vide via ce petit orifice (7), sous l'effet dudit ressort de rappel (R₁, R₂).

9. Appareil selon la revendication 8, caractérisé par le fait que ledit abreuvoir (31) est équipé d'un système d'évacuation de trop plein (310).

10. Appareil selon la revendication 8 ou 9, caractérisé par le fait que la chambre avant (501) du piston (54) est raccordée audit abreuvoir (31), de sorte que, lors du vidage de la chambre arrière (500), de l'eau (E) est aspirée dans celle-ci et éventuellement déversée sur les aliments (A) présents dans la mangeoire (30) pour les humidifier.

11. Appareil selon l'une des revendications 8 à 10, caractérisé par le fait qu'il comporte des moyens de réchauffage de l'eau contenue dans l'abreuvoir (31).
